# EUROPEAN PATENT SPECIFICATION

(11) **EP 2 105 079 B1**
(45) Date of publication and mention of the grant of the patent: **16.05.2012**
(21) Application number: 09388006.0
(22) Date of filing: 25.03.2009
(51) Int. Cl.: A47L 9/28, H01M 2/10

(54) **Vacuum cleaner**
Staubsauger
Aspirateur

(30) Priority: 28.03.2008 DK 200800456; 23.05.2008 DK 200800712
(43) Date of publication of application: 30.09.2009
(73) Proprietor: Nilfisk-Advance A/S, 2605 Bröndby (DK)
(72) Inventor: Björk, Jan, 460 64 Frändefors (SE)
(74) Representative: Larsen, Hans Ole

(56) References cited:
- EP-A1- 0 374 600
- EP-A2- 0 401 531
- WO-A1-00/36969
- DE-A1-102005 007 923
- JP-A- 2 200 230
- KR-B1- 100 762 327
- US-A- 2 867 834
- US-A- 4 835 410

## Description

The invention relates to a vacuum cleaner having two holders, which are adapted, by means of a locking device, to secure and/or release a battery and/or a power supply from the holders and that the holders have a height which is larger than that of the battery and or of the power supply, and that the battery and/or the power supply is locked in the holders by means of a locking pawl, which engages an engagement face on the battery and/or the power supply when the locking device is in a locked state.

Normally, vacuum cleaners are provided with motors which are powered via a power cord from the public mains. The power cord frequently causes problems to the operator, as, during the work, it gets entangled with articles of furniture or is found to be too short so that it has to be moved to another power point.

When vacuum cleaning large floor areas, it may be necessary to have extension cords, which results in an inexpedient working operation with a relatively heavy cord hanging in the vacuum cleaner.

Therefore, solutions have been proposed in which the vacuum cleaner is driven by a battery.

US Patent No. 3,267,510 discloses a battery powered vacuum cleaner, whose battery is charged by means of a charger, which is to be connected to the public mains. The charger is connected to the vacuum cleaner and the incorporated battery via a plug. The charger is removed in use. The batteries are disposed in the interior of the vacuum cleaner and are connected to the charging plug by printed circuit connections. The charger cannot serve as a power supply for the motor of the vacuum cleaner. The vacuum cleaner is not adapted for rapid exchange of the batteries.

US Patent No. 4,835,409 discloses a vacuum cleaner, whose motor may be driven by a battery and a power supply, said power supply and said battery being integrated in the vacuum cleaner. The vacuum cleaner is not adapted for rapid exchange of battery or power supply.

US Patent No. 4,210,978 discloses a carpet cleaning machine, where both battery and power supply are integrated in the machine. The machine is not adapted for rapid exchange of battery or power supply.

KR 100 762 327 B1 discloses a vacuum cleaner, where the battery is integrated in the part (60) of the vacuum cleaner. The battery is embedded in the vacuum cleaner and is not easy accessible.

EP 0 374 600 A1 discloses a holder for a battery to a mobile electric hand tool. The battery has to be charged by a separate power supply.

DE 10 2005 007 923 A1 discloses a vacuum cleaner, where the battery is embedded in the vacuum cleaner in a battery chamber. The chamber is closed with a door which has to be opened in order to exchange a battery.

It is the object of the invention to teach how the vacuum cleaner may be arranged expediently with holders for battery and power supply, said holders being provided with locking devices for securing or releasing battery and/or power supply by, configuring the holder so that it has a height which is larger than that of the battery and/or of the power supply, and that the battery and/or the power supply is locked in the holder by means of a locking pawl, which engages an engagement face on the battery and/or the power supply when the locking device is in a locked state as stated in the characterizing portion of claim 1, and where the holders are disposed symmetrically around the central line at the rear of the vacuum cleaner, and that each holder is formed by a space on the external surface of the vacuum cleaner and have a depth smaller than that of the battery and/or power supply by means of which the handle of the battery and/or power supply is direct accessible when the battery and/or power supply is installed.

When, as stated in claim 2, the holder is configured so as to be formed by a space on the external surface of the vacuum cleaner, said space having a lateral wall in which the locking pawl may be moved to and fro in the space through a slit in the lateral wall, it is ensured that there is ready access to battery and/or power supply.

When, as stated in claim 3, the locking pawl is secured to a pushbutton which is adapted to move the locking pawl to and fro, it is ensured that the battery and/or the power supply may be secured or released by operating the pushbutton.

When, as stated in claim 4, the pushbutton is provided with a biased spring, it is ensured that the battery and/or the power supply is locked, as soon as the locking pawl is opposite the engagement face on the battery and/or the power supply, and that the locking pawl remains in the locked position until the pushbutton is released.

When, as stated in claim 5, the locking device is disposed in a handgrip for the vacuum cleaner, it is ensured that the pushbutton of the locking device may be operated by one hand, while the battery and/or the power supply is removed by the other hand.

Moreover, as stated in claim 6 and claim 7, it is expedient to provide the handgrip with two locking devices, and to configure the handgrip as a separate unit which may be screwed on to the vacuum cleaner.

The invention will be explained with reference to the drawing, in which
- fig. 1: shows a vacuum cleaner seen from behind with two hold- ers, where the one holder is empty, and the other (right) holder has mounted a battery,
- fig. 2: shows a battery for the vacuum cleaner of fig. 1 seen from the side,
- fig. 3: shows the vacuum cleaner of fig. 1 without batteries or power supply, thereby showing the openings for the power poles of the batteries or for the electrical connection of a power supply to the vacuum cleaner; also shown are fin- ger grips (pushbuttons) for a locking device for batteries or power supply,
- fig. 4: is an enlarged view of details of the locking device and the lowing pawl of the locking device, shown in the position in which a battery or a power supply may be secured,
- figs. 5 and 6: show the handgrip of the vacuum cleaner seen from above, in which two locking devices are integrated, where fig. 5 shows the handgrip seen from above, and fig. 6 shows the lower side of the handgrip with the locking pawls seen from below.

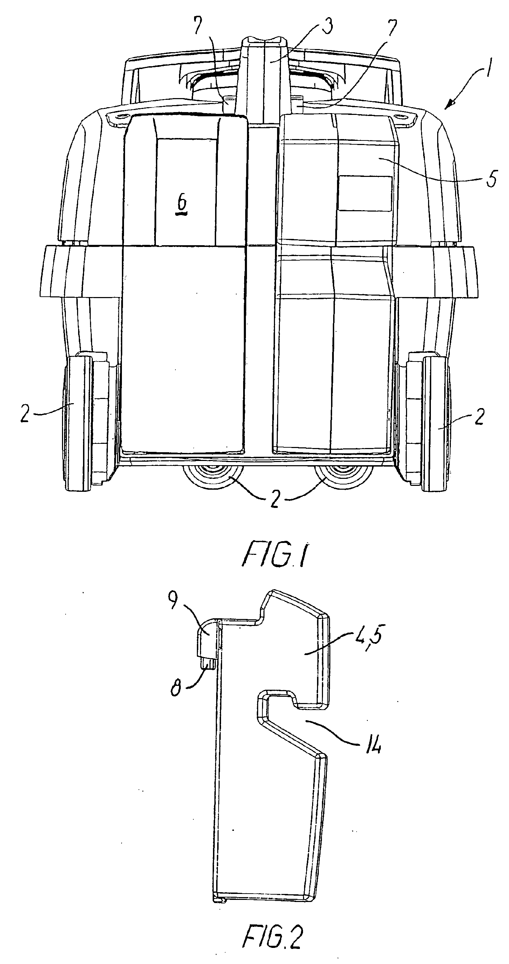

Fig. 1 shows a vacuum cleaner 1 in its entirety with three or four wheels 2 and with a handgrip 3. Two holders 6 for batteries and/or power supply are shown at the rear of the vacuum cleaner. A battery 5 is disposed in the one holder 6, while the other holder 6 is empty. The two holders 6 are disposed symmetrically around the central line of the vacuum cleaner.

Fig. 2 shows a lateral view of a battery 4, 5 with the power poles 8 and the engagement face 9. The position and direction of the power poles and the handle 14 of the battery illustrate how the battery may be released by a vertical movement up into the holder.

The power supply, which is not shown, is configured like the batteries and therefore has the same profile as the batteries 4, 5 and is likewise provided with power poles like these. The power supply is provided with a connection facility to the mains.

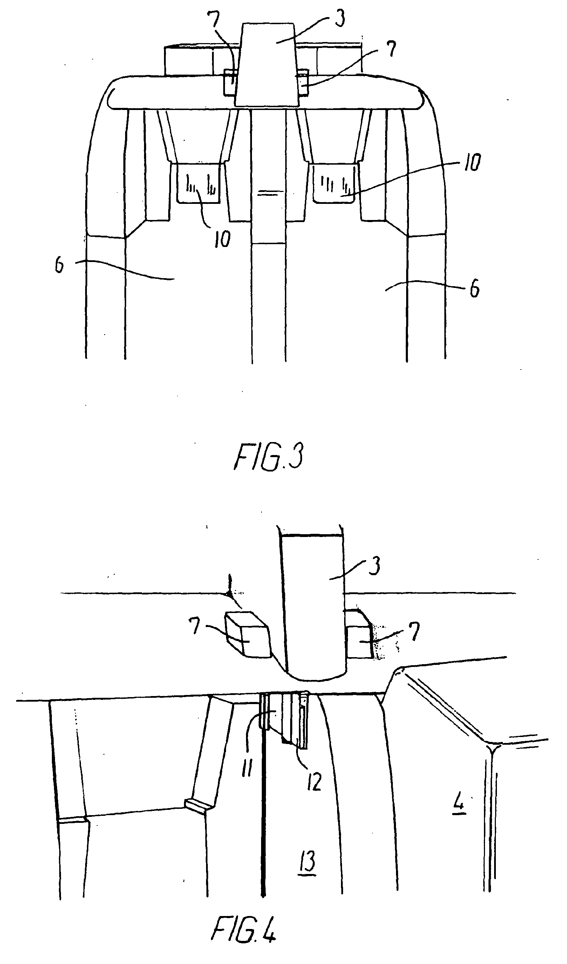

Fig. 3 shows the vacuum cleaner with empty holders 6. The holders 6 are shown with the openings 10 for the power poles, and the pushbuttons 7 are shown on the handgrip 3. It is moreover shown in the figure how both locking devices may be released by one hand, as each locking pawl 11, see fig. 4, is coupled together with or constructed integrally with a pushbutton 7. When the pushbutton 7 is affected against a spring, it may be moved laterally, i.e. transversely to the opening of the holder 6, see fig. 4, thereby allowing a battery or a power supply to be removed from the holder 6.

Thus, batteries may be exchanged on the vacuum cleaner and/or a battery may be replaced by a power supply in a simple manner and entirely without the use of a tool or the like.

Fig. 4 shows a detailed view of the locking device. The locking pawl 11 is shown in the position in which a battery or a power supply may be secured. The locking pawl 11 is shown to be extended through the slit 12 in the lateral wall 13 of the holder 6.

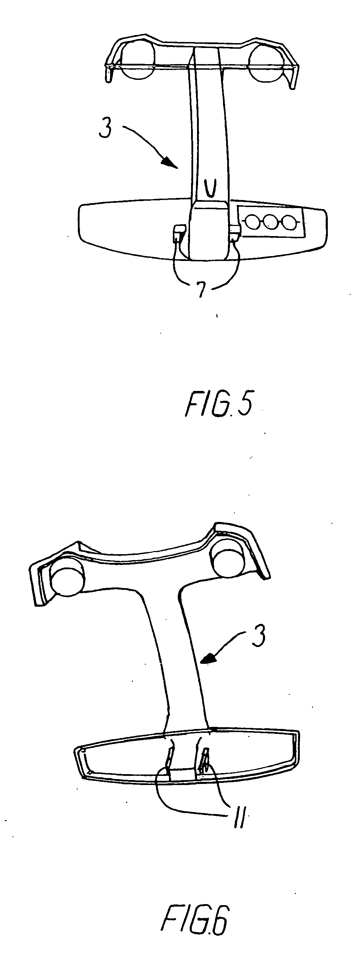

Figs. 5 and 6 show the handgrip 3 of the vacuum cleaner, in which two locking devices are integrated. Fig. 5 shows the handgrip 3 seen from above with two pushbuttons 7, and fig. 6 shows the lower side of the handgrip 3 with the locking pawls 11.

## Claims

1. A vacuum cleaner having two holders (6), which are adapted, by means of a locking device, to secure and/or release a battery (4,5) and/or a power supply from the holders, and that the holders (6) have a height which is larger than that of the battery (4, 5) and or of the power supply, and that the battery (4, 5) and/or the power supply is locked in the holders (6) by means of a locking pawl (11), which engages an engagement face (9) on the battery (4, 5) and/or the power supply when the locking device is in a locked state, **characterized in that** the holders (6) are disposed symmetrically around a central line at the rear of the vacuum cleaner, and each holder is formed by a space on the external surface of the vacuum cleaner and have a depth smaller than that of the battery (4,5) and/or power supply by means of which a handle (14) of the battery and/or power supply is direct accessible when the battery and/or power supply is installed.

2. A vacuum cleaner according to claim 1, **characterized in that** the holder (6) is formed by a space in the vacuum cleaner, said space having a lateral wall (13) in which the locking pawl (11) may be moved to and fro in the space through a slit (12) in the lateral wall.

3. A vacuum cleaner according to claims 1 - 2, **characterized in that** the locking pawl (11) is secured to a pushbutton (7), which is adapted to move the locking pawl to and fro in the opening of the holder (6).

4. A vacuum cleaner according to claim 3, **characterized in that** the pushbutton (7) is biased by a spring.

5. A vacuum cleaner according to claims 1 - 4, **characterized in that** the locking device is integrated in a handgrip (3) for the vacuum cleaner.

6. A vacuum cleaner according to claim 5, **characterized in that** two locking devices are integrated in the handgrip.

7. A vacuum cleaner according to claims 5 - 6, **characterized in that** the handgrip with locking device is configured as a separate unit, which may be screwed on to the vacuum cleaner.

## Patentansprüche

1. Staubsauger, der zwei Halter (6) hat, die so eingerichtet sind, dass sie mittels einer Arretiereinrichtung eine Batterie (4, 5) und/oder eine Stromquelle an den Haltern befestigen und/oder von ihnen lösen, wobei die Halter (6) eine Höhe haben, die größer ist als die der Batterie (4, 5) und/oder der Stromquelle, und die Batterie (4, 5) und/oder die Stromquelle in den Haltern (6) mittels einer Arretierklinke (11) arretiert wird/werden, die mit einer Eingriffsfläche (9) an der Batterie (4, 5) und/oder der Stromquelle in Eingriff ist, wenn sich die Arretiereinrichtung in einem arretierten Zustand befindet, **dadurch gekennzeichnet, dass** die Halter (6) symmetrisch um eine Mittellinie herum an der Rückseite des Staubsaugers angeordnet sind, jeder Halter durch einen Raum an der Außenfläche des Staubsaugers gebildet wird und eine Tiefe hat, die kleiner ist als die der Batterie (4, 5) und/oder der Stromquelle, und darüber ein Griff (14) der Batterie und/oder Stromquelle direkt zugänglich ist, wenn die Batterie und/oder Stromquelle installiert ist/sind.

2. Staubsauger nach Anspruch 1, **dadurch gekennzeichnet, dass** der Halter (6) durch einen Raum in dem Staubsauger gebildet wird, wobei der Raum eine seitliche Wand (13) hat, in der die Arretierklaue (11) über einen Schlitz (12) in der seitlichen Wand in den Raum hinein und aus ihm heraus bewegt werden kann.

3. Staubsauger nach den Ansprüchen 1-2, **dadurch gekennzeichnet, dass** die Arretierklaue (11) an einem Druckknopf (7) befestigt ist, der so eingerichtet ist, dass er die Arretierklaue in die Öffnung des Halters (6) hinein und aus ihr heraus bewegt.

4. Staubsauger nach Anspruch 3, **dadurch gekennzeichnet, dass** der Druckknopf (7) durch eine Feder gespannt wird.

5. Staubsauger nach den Ansprüchen 1-4, **dadurch gekennzeichnet, dass** die Arretiereinrichtung in einen Handgriff (3) für den Staubsauger integriert ist.

6. Staubsauger nach Anspruch 5, **dadurch gekennzeichnet, dass** zwei Arretiereinrichtungen in den Handgriff integriert sind.

7. Staubsauger nach den Ansprüchen 5-6, **dadurch gekennzeichnet, dass** der Handgriff mit Arretiereinrichtung als eine separate Einheit aufgebaut ist, die an dem Staubsauger angeschraubt werden kann.

## Revendications

1. Aspirateur comportant deux supports (6), qui sont adaptés au moyen d'un dispositif de verrouillage, pour attacher et/ou dégager une batterie (4, 5) et/ou une alimentation électrique des supports, **caractérisé en ce que** les supports (6) ont une hauteur qui est plus importante que celle de la batterie (4, 5) et/ou de l'alimentation électrique, et **en ce que** la batterie (4, 5) et/ou l'alimentation électrique est verrouillée dans les supports (6) au moyen d'un cliquet de verrouillage (11), qui enclenche une face d'enclenchement (9) sur la batterie (4, 5) et/ou l'alimentation électrique lorsque le dispositif de verrouillage est dans un état verrouillé, **caractérisé en ce que** les supports (6) sont disposés symétriquement autour d'une ligne centrale à l'arriére de l'aspirateur, et chaque support est formé par un espace sur la surface externe de l'aspirateur et a une profondeur plus petite que celle de la batterie (4, 5) et/ou de l'alimentation électrique au moyen duquel une manette (14) de la batterie et/ou de l'alimentation électrique est directement accessible lorsque la batterie et/ou l'alimentation électrique est installée.

2. Aspirateur selon la revendication 1, **caractérisé en ce que** le support (6) est formé par un espace dans l'aspirateur, ledit espace comportant une paroi latérale (13) dans laquelle le cliquet de verrouillage (11) peut être déplacé en va-et-vient dans l'espace à travers une fente (12) dans la paroi latérale.

3. Aspirateur selon les revendications 1 à 2, **caractérisé en ce que** le cliquet de verrouillage (11) est attaché à un bouton poussoir (7), qui est adapté pour déplacer le cliquet de verrouillage en va-et-vient dans l'ouverture du support (6).

4. Aspirateur selon la revendication 3, **caractérisé en ce que** le bouton poussoir (7) est sollicité par un ressort.

5. Aspirateur selon les revendications 1 à 4, **caractérisé en ce que** le dispositif de verrouillage est intégré dans une poignée (3) pour l'aspirateur.

6. Aspirateur selon la revendication 5, **caractérisé en ce que** deux dispositifs de verrouillage sont intégrés dans la poignée.

7. Aspirateur selon les revendications 5 à 6, **caractérisé en ce que** la poignée avec le dispositif de verrouillage est configurée en tant qu'unité séparée, qui peut être vissée sur l'aspirateur.
